# EUROPEAN PATENT SPECIFICATION

(11) **EP 3 176 141 B1**
(45) Date of publication and mention of the grant of the patent: **17.06.2020**
(21) Application number: 15290297.9
(22) Date of filing: 02.12.2015
(51) Int. Cl.: C04B 28/14, C04B 40/00

(54) **PLASTICIZER COMPOSITION FOR PRODUCING GYPSUM BOARDS**
WEICHMACHERZUSAMMENSETZUNG ZUM HERSTELLEN VON GIPSPLATTEN
COMPOSITION DE PLASTIFIANT POUR PRODUIRE DES PLAQUES DE PLÂTRE

(43) Date of publication of application: 07.06.2017
(73) Proprietor: Etex Building Performance International SAS, 84000 Avignon (FR)
(72) Inventor: Martin, Daniel, 84270 Vedène (FR)
(74) Representative: Vaeck, Elke

(56) References cited:
- EP-A1- 1 790 625
- EP-A1- 2 218 699
- WO-A1-02/083594
- CHRISTINA HAMPEL ET AL: "Optimisation of plasticizers for gypsum applications Optimierung von Fliessmitteln für Gipsanwendungen", ZKG INTERNATIONAL,, vol. 66, no. 2, 1 January 2013 (2013-01-01), pages 56-61, XP001586333, ISSN: 0949-0205

## Description

### FIELD OF THE INVENTION

Described herein are plasticizer compositions and plaster compositions comprising said plasticizer compositions. The plaster compositions may be used for the manufacture of plasterboard. Further described herein are methods for the manufacture of the plasticizer and plaster compositions, and of the plasterboard.

### BACKGROUND OF THE INVENTION

Plasterboard or drywall is a panel made of gypsum, which is typically used in the construction of walls and ceilings.

Plasterboard is typically manufactured via the deposition of a slurry containing calcium sulphate hemihydrate on a facer or liner, followed by applying a second facer on the slurry and forming the slurry into the shape of a panel. The hemihydrate and water of the slurry react to form gypsum (calcium sulphate dehydrate), which is known as "setting". The excess water is removed via drying in a kiln.

As the step of drying the plasterboard to remove excess water consumes a lot of energy, it is further preferred to minimize the excess of water used in the process. However, reducing the amount of water leads to a reduced fluidity or flowability of the slurry.

Moreover, in order to facilitate transport and handling, light-weight boards are preferred. The production of light-weight boards typically involves a process as described above, wherein a foam is mixed with the slurry before the deposition on the facer. The use of foam allows for reducing the plasterboard core weight, as it introduces voids (bubbles) in the core. Although the addition of foam reduces the weight of the boards, this also reduces the fluidity of the slurry.

Accordingly, there are various aspects which can lead to a reduced fluidity of the slurry, which may impede the production process. The fluidity reduction can be counteracted by the addition of one or more dispersants or fluidizers, such as naphthalene sulphonate and polycarboxylate dispersants. Polycarboxylate ethers (PCEs) are well known as fluidizer for cementitious binders, but are increasingly used as fluidizer for gypsum slurries.

However, dispersants are known to prolong the setting time of the slurry significantly, which can necessitate a reduction of the production speed. WO2012028668 describes the use of specific polymeric dispersants which allow for increasing the flowability of a gypsum slurry, while minimizing the effect on the setting time.

However, when used in gypsum slurries comprising foam, the addition of dispersants is also known to influence the bubble size. It is important that the bubble size is controlled, because an excess of small bubbles can lead to a significant losses of mechanical properties such as the compressive strength, whereas an excess of large bubbles can cause aesthetic problems. Most dispersants lead to a reduced compressive strength.

The use of dispersants can also result in a reduced adhesion between the plasterboard core and the facers.

Document WO02/083594 A1 discloses the use of polycarboxylate ether (PCE) copolymers for use in plaster compositions suitable for production of gypsum wallboards comprising also a second fluidifier such as calcium lignosulfonate in an amount of at least 30wt%.

Accordingly, there is a need of methods for manufacturing plasterboards mitigating at least part of the problems described above.

### SUMMARY OF THE INVENTION

Known plasticizers are known for use in gypsum slurries present a number of drawbacks. For example, polycarboxylate (PCE) plasticizers result in plasterboards having a reduced bond between the gypsum core and the paper facer, and having a limited compressive strength. Also lignosulphonate (LS) plasticizers severely reduce the compressive strength of the boards. The present inventors surprisingly found that, under certain circumstances, a combination of PCE and LS plasticizers allows for a significant increase of the compressive strength while still providing a good bond between the gypsum core and the facers. In order to achieve this, a specific ratio of LS and PCE is to be used.

The compositions and methods described herein allow for obtaining light-weight plasterboards which have a high compressive strength, while still providing a good bond between the gypsum core and the facers. Additionally or alternatively, the compositions and plasterboards described herein can provide a better adhesion between the core and facer, when compared to known plasterboards having the same compression strength. Moreover, the plasticizer compositions described herein may provide a good fluidity, even when using relatively low amounts of plasticizer.

Thanks to the above properties, the plasticizer compositions described herein can have an excellent water reduction capability, thus allowing for a reduced energy consumption of the manufacture process. The use of polycarboxylates and lignosulphonates also allows to eliminate the presence of the carcinogen formaldehyde in the compositions and boards.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description which illustrates, by way of example, the principles of the invention. This description is given for the sake of example only, without limiting the scope of the invention.

### DETAILED DESCRIPTION OF THE INVENTION

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art. The following terms are provided solely to aid in the understanding of the invention.

When reference is made to weight percentage (wt%), this is to be understood, unless differently specified, as the weight of the component expressed as percentage over the total weight of the composition in which the component is present.

The term "gypsum" as used herein refers to calcium sulphate dihydrate (DH), i.e. CaSO₄·2H₂O· Gypsum which is present in plasterboards typically is obtained via the hydration of plaster.

The term "plaster" or "stucco" as used herein and in the generally accepted terminology of the art, refers to a partially dehydrated gypsum of the formula CaSO₄·xH₂O, where x can range from 0 to 0.6. The term "plaster" is also referred to herein as "hydratable calcium sulphate". The term "dry weight" when referred to plaster in a plaster composition, refers to the weight of the calcium sulphate including hydration water (i.e. the xH₂O of the above formula), but excluding the gauging water in the composition.

Plaster can be obtained via the calcination of gypsum, i.e. the thermal treatment of gypsum in order to remove (a part of) the combined water. For the preparation of plaster, natural or synthetic gypsum may be used. Natural gypsum may be obtained from gypsum rock or gypsum sand. Synthetic gypsum typically originates from flue gas desulphurization (FGD) or phosphonic acid production.

Plaster wherein x is 0.5 is known as "calcium sulphate hemihydrate" (HH) or "calcium sulphate semihydrate" (SH), i.e. CaSO₄·0.5H₂O. Calcium sulphate HH can occur in different crystalline forms; known as α and β. Calcium sulphate HH is also known as "gypsum plaster" or "plaster of Paris".

Plaster wherein x is 0 is known as "calcium sulphate anhydrite" or "anhydrous calcium sulphate". "Calcium sulphate anhydrite III" (AIII) refers to a dehydrated HH with the potential of reversibly absorbing water or vapor. "Calcium sulphate anhydrite II" (All) refers to the completely dehydrated calcium sulphate (CaSO₄). All is formed at higher temperatures and is preferably not used for the preparation of plasterboard.

The terms "plasterboard" and "gypsum board" as used herein interchangeably and refer to a panel or board comprising a gypsum core, obtainable from a plaster slurry as described herein. Accordingly, the term "plasterboard" refers to a board or panel which is obtainable via the setting (hydration) of plaster. The term "board" or "panel" as used herein refers to any type of wall, ceiling or floor component of any required size.

The term "alkyl" by itself or as part of another substituent, refers to a linear or branched saturated hydrocarbon group joined by single carbon-carbon bonds.

When a subscript is used herein following a carbon atom, the subscript refers to the number of carbon atoms that the named group may contain. Thus, for example, C₁₋₄alkyl means an alkyl of one to four carbon atoms. Examples of C₁₋₄alkyl groups are methyl, ethyl, propyl, isopropyl, butyl, isobutyl and tert-butyl.

The term "alkylene" by itself or as part of another substituent, refers to alkyl groups that are divalent, i.e., with two single bonds for attachment to two other groups. Alkylene groups may be linear or branched and may be substituted as indicated herein. Non-limiting examples of alkylene groups include methylene (-CH₂-), ethylene (-CH₂-CH₂-), and methylmethylene (-CH(CH₃)-).

"C₁₋₆alkylene", by itself or as part of another substituent, refers to C1-6alkyl groups that are divalent, i.e., with two single bonds for attachment to two other groups. Alkylene groups may be linear or branched and may be substituted as indicated herein.

The term "aryl", by itself or as part of another substituent, refers to a polyunsaturated, aromatic hydrocarbyl group having a single ring (i.e. phenyl) or multiple aromatic rings fused together (e.g. naphthalene), or linked covalently; wherein at least one ring is aromatic. Typical aryl groups may contain 6 to 10 atoms and are referred to as "C₆₋₁₀aryl". Aryl rings may be unsubstituted or substituted with from 1 to 4 substituents on the ring. Aryl may be substituted with halo, cyano, nitro, hydroxy, carboxy, amino, acylamino, alkyl, heteroalkyl, haloalkyl, phenyl, aryloxy, alkoxy, heteroalkyloxy, carbamyl, haloalkyl, methylenedioxy, heteroaryloxy, or any combination thereof. Examples of C₆₋₁₀aryl include phenyl, naphthyl, indanyl, or 1,2,3,4-tetrahydro-naphthyl.

The term "arylene" by itself or as part of another substituent, refers to aryl groups that are divalent, i.e., with two single bonds for attachment to two other groups. For example, the term "C₁₋₆alkylC₆₋₁₀arylene", by itself or as part of another substituent, refers to a C₆₋₁₀aryl group as defined herein, wherein a hydrogen atom is replaced by a C₁₋₆alkyl as defined herein.

The term "monovalent metal" as used herein refers to a metal refers to a metal which is part of an ionic bond wherein said metal forms an ion having a charge of +1. Examples of monovalent metals are the metals (thus not including hydrogen) of Group 1 of the IUPAC periodic table. Preferred monovalent metals are Na, K, and Li.

The term "divalent metal" as used herein refers to a metal refers to a metal which is part of an ionic bond wherein said metal forms an ion having a charge of +2. Examples of divalent metals are the metals of Group 2 of the IUPAC periodic table. Preferred divalent metals are Mg and Ca.

The term "trivalent metal" as used herein refers to a metal refers to a metal which is part of an ionic bond wherein said metal forms an ion having a charge of +3. Examples of trivalent metals are Al and Fe.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Provided herein are plasticizer compositions, which are particularly useful in plaster compositions. Plasticizers, also known as "dispersants" or "fluidizers", are additives that increase the plasticity or fluidity of a material. The present inventors surprisingly found that the combination of a polycarboxylate ether and a lignosulphonate in certain ratios allow for obtaining light-weight plasterboards having a good compression strength, while also maintaining a good adhesion between the plasterboard core and the facer. Accordingly, provided herein is a plasticizer composition comprising a mixture of one or more polycarboxylate ethers and one or more lignosulphonates, wherein the lignosulphonate(s) represent from 1.0 wt% to 20 wt% of the total polycarboxylate ether and lignosulphonate weight, i.e. the combined weight of all PCEs and lignosulphonates. This will be explained further below.

The plasticizer compositions described herein comprise at least one PCE. PCEs are water-soluble comb polymers which are also known as "superplasticizers". They typically have a charged backbone and uncharged side chains. The backbones can be composed of acrylic acid, methacrylic acid, maleic acid, vinyl, allyl and mixtures thereof. The side chains, often being a polyalkylene glycol, may be grafted by either esterification or amidation to the preformed backbone bearing carboxylic acid groups or included through copolymerization of backbone monomers with macromonomers carrying a side chain.

The plasticizer compositions described herein may comprise one type of polycarboxylate ether, or a mixture of different types of polycarboxylate ethers.

In preferred embodiments, the one or more PCEs used in the present composition have a molecular mass ranging from 10,000 Daltons to 400,000 Daltons. In further embodiments, the one or more PCEs have a molecular weight between 20,000 Daltons and 60,000 Daltons.

Examples of suitable PCE compounds and methods for the preparation thereof are described in patent EP2411346 (Lafarge Gypsum), patent US6777517 (Degussa), patent US5798425 (Süddeutsche Kalkstickstoff), patent application US2006/0278130 (United States Gypsum), and patent application WO2012/028668 Silka).

Examples of suitable commercially available PCEs include, but are not limited to: Viscocrete® G2 (available from Sika AG, Switzerland); neomere®FLOW 580N, neomere®FLOW 570S, and CHRYSO®Fluid Premia 180 (available from Chryso SAS, France); Ethacryl™ M and Ethacryl™ G (available from Coatex, Arkema Group, France); Melflux® 1086L (available from BASF, Germany); and Mighty G21 (available from Kao Specialties Americas).

PCEs are polymers and therefore comprise at least one repeating unit. Often, PCEs are copolymers comprising two or more co-monomers, i.e. different repeating units. The PCEs may comprise random or statistical copolymers, gradient copolymers, alternating copolymers, and/or block copolymers.

In particular embodiments, the composition comprises at least one PCE comprising a repeating unit of Formula (I): 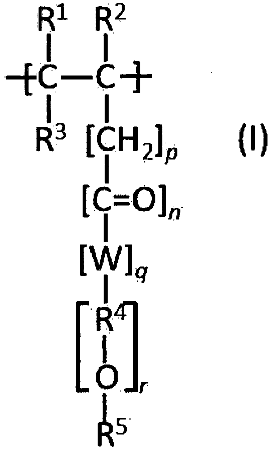 wherein
*p* is an integer from 0 to 2;
*n* and *q* are independently 0 or 1; preferably *q* is 1 if *n* is 1;
*r* is an integer from 0 to 500, preferably at least 2;
W is oxygen, nitrogen, or a bivalent NH radical; preferably W is oxygen;
R¹, R², and R³ independently is selected from the list consisting of hydrogen, an aliphatic hydrocarbon group comprising 1 to 20 carbon atoms, and -COOR⁸; wherein R⁸ is hydrogen, C₁₋₄alkyl, a monovalent metal, a divalent metal, a trivalent metal, or a quaternary ammonium radical; wherein preferably not more than one of R¹, R², and R³ is -COOR⁸; preferably R¹ and R³ are hydrogen;
R⁴ is C₂₋₂₀alkylene, preferably C₂₋₄alkylene; and
R⁵ is hydrogen, C₁₋₂₀alkyl, or a radical of Formula (IIa) or (IIb): 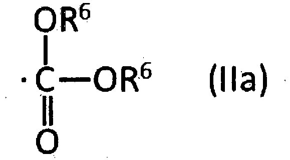 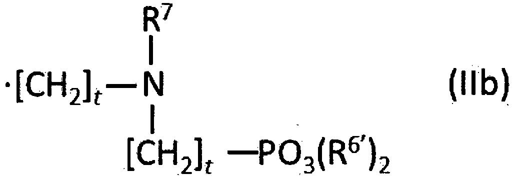 wherein
   R⁶ and R^{6'} are hydrogen, C₁₋₂₀alkyl, a monovalent metal, a divalent metal, a trivalent metal, or a quaternary ammonium radical;
   *t* is an integer from 0 to 18; and
   R⁷ is hydrogen, C₁₋₁₈alkyl, or a radical of formula -[CH₂]ₜPO₃(R^{6'})₂, wherein *t* and R^{6'} have the same meaning as defined above.

In particular embodiments, the composition may comprise at least one PCE comprising a repeating unit of Formula (I), wherein: *p* is an integer from 0 to 2; *n* and *q* are 1; *r* is an integer from 2 to 250; W is oxygen; R¹, R², and R³ are hydrogen; R⁴ is C₂₋₄alkylene; and R⁵ has the same meaning as defined above.

In particular embodiments, the composition may comprise at least one PCE comprising a repeating unit of Formula (I), wherein: *p* is an integer from 0 to 2; *n* is 0; *q* is 1; *r* is an integer from 2 to 250; W is oxygen; R¹, R², and R³ are hydrogen; R⁴ is C₂₋₄alkylene; and R⁵ has the same meaning as defined above. In further embodiments, *p* may be 0 or 1.

In particular embodiments, the plasticizer composition may comprise a PCE comprising at least one repeating unit which satisfies Formula (III): 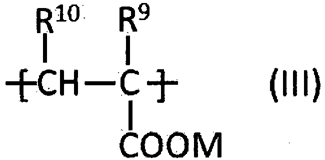 wherein
R⁹ is hydrogen or C₁₋₄alkyl;
R¹⁰ is hydrogen, C₁₋₄alkyl, or -COOM'; and
M and M' are independently selected from is hydrogen, C₁₋₆alkyl, or a monovalent metal, a divalent metal, or a trivalent metal. Preferably, M is Na or K.

In preferred embodiments, R¹⁰ is hydrogen, and M is Na or K. In further preferred embodiments, R⁹ and R¹⁰ are hydrogen; and M is Na or K.

In particular embodiments, the composition may comprise at least one PCE, which is a polymer comprising a repeating unit of Formula (III) shown above, wherein:
R⁹ is hydrogen;
R¹⁰ is a radical of formula -COOM', wherein M' is Na or K; and
M is a radical of formula -[CH₂CH₂O]*ₚ*CH₃ wherein *p* is an integer from 1 to 100.

In preferred embodiments, the plasticizer composition may comprise a PCE having a repeating unit which satisfies Formula (IV) 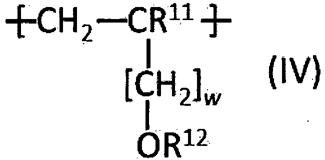 wherein R¹¹ is hydrogen, or a saturated or unsaturated aliphatic hydrocarbon group comprising 1 to 5 carbon atoms, which may be linear or branched;
w is an integer ranging from 0 to 3, and preferably 0 or 1; and
R¹² is derived from an unsaturated (poly)alkylene glycol ether group, preferably according to Formula (V): 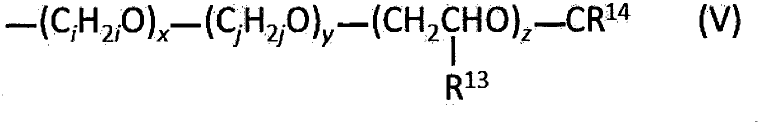 wherein i and *j* are independently an integer from 2 to 5; preferably at least one of *i* and *j* is 2;
   x and *y* are independently an integer ranging from 1 to 350;
   z is an integer ranging from 0 to 200;
   R¹³ is a substituted or non-substituted C₆₋₁₀aryl group, preferably phenyl; and
   R¹⁴ is hydrogen, an aliphatic hydrocarbon group comprising 1 to 20 carbon atoms, a radical of Formula (IIa) or (IIb) (wherein R⁶, R^{6'}, and t have the same meaning as defined above), or a group of Formula (IIIa), (IIIb), or (IIIc): 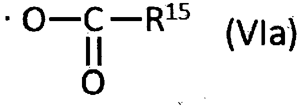 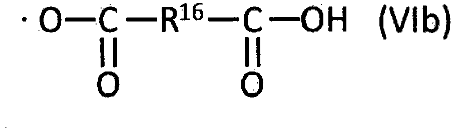 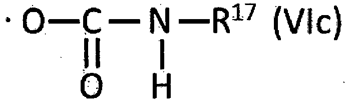 wherein R¹⁵ and R¹⁷ independently are C₁₋₂₀alkyl, C₆₋₁₂aryl, C₇₋₂₀aralkyl, or C₇₋₂₀alkylaryl; and R¹⁶ is C₁₋₂₀alkylene, C₆₋₁₂arylene, C₇₋₂₀aralkylene, or C₇₋₂₀alkylarylene.

In particular embodiments, the compositions described herein may comprise a PCE having two or more repeating unit selected from a repeating unit of Formula (I), a repeating unit of Formula (III), and a repeating unit of Formula (IV) as described above.

The PCE compound should comprise at least one repeating unit comprising a carboxyl group, or salt or ester thereof. Preferably, the one or more PCE compound(s) comprise at least 50 wt% of one or more repeating units comprising a carboxyl group, or salt or ester thereof. Preferably, the PCE compound comprises at least one repeating unit:
- of Formula (I) wherein *n* and *q* are 1, W is oxygen; and R¹, R², R³, R⁴, R⁵, *p*, *q,* and *r* are as defined above; and/or
- of Formula (III) wherein R⁹, R¹⁰, and M are as defined above.

Preferably, the salt form is used for the carboxyl moieties; most preferably Na and/or K salts.

In particular embodiments, the composition may comprise at least one PCE comprising a repeating unit originating from a monomer selected from:
- unsaturated monomers of monocarboxylic or dicarboxylic acid, such as acrylic acid, methacrylic acid, maleic acid, maleic anhydride, fumaric acid, itaconic acid, itaconic anhydride or citraconic acid, and their salts of monovalent or divalent metals, quaternary ammonium or organic amines;
- esters and diesters of the abovementioned unsaturated monomers of monocarboxylic or dicarboxylic acid having an alcohol functional group having from 1 to 30 carbon atoms;
- amides and diamides of the abovementioned unsaturated monomers of monocarboxylic or dicarboxylic acid having an amine functional group having from 1 to 30 carbon atoms;
- esters and diesters of the abovementioned unsaturated monomers of monocarboxylic or dicarboxylic acid having an alkoxy(poly(alkylene glycol)s) functional group obtained by addition of from 1 to 500 mol of alkylene oxide having from 2 to 18 carbon atoms to the abovementioned alcohols and amines;
- esters and diesters of the abovementioned unsaturated monomers of monocarboxylic or dicarboxylic acid having a glycol functional group possessing from 2 to 18 carbon atoms or possessing from 2 to 500 poly(alkylene glycol)s as molar addition number of the preceding glycols;
- unsaturated sulfonic acids, such as vinylsulphonate, (meth)allylsulphonate, 2-(meth)acryloxyethylsulphonate, 3-(meth)acryloxypropylsulphonate, 3-(meth)acryloxy-2-hydroxypropylsulphonate, 3-(meth)acryloxy-2-hydroxypropyl sulfophenyl ether, 3-(meth)acryloxy-2-hydroxypropyloxysulfobenzoate, 4-(meth)acryloxybutylsulphonate, (meth)acrylamidomethylsulfonic acid, (meth)acrylamidoethylsulfonic acid, 2-methylpropanesulfonic acid (meth)acrylamide and styrenesulfonic acid, or their salts of monovalent or divalent metals, quaternary ammonium or organic amines;
- vinylaromatic compounds, such as styrene, α-methylstyrene, vinyltoluene and p-methylstyrene;
- unsaturated amides, such as (meth)acrylamide, (meth)acrylalkylamide, N-methylol(meth)acrylamide and N,N-dimethyl(meth)acrylamide;
- unsaturated esters, such as vinyl acetate and vinyl propionate;
- unsaturated amines, such as aminoethyl(meth)acrylate, methylaminoethyl (meth)acrylate, dimethylaminoethyl(meth)acrylate, dimethylaminopropyl(meth)-acrylate, dibutylaminoethyl(meth)acrylate and vinylpyridine;
- allyl compounds, such as (meth)allyl alcohol and glycidyl(meth)allyl ether; for which the molar mass of said copolymer is from 15 000 to 250 000 daltons, said copolymer not comprising crosslinking units.

The plasticizer compositions described herein comprise at least one lignosulphonate compound. The compositions may comprise one type of lignosulphonate, or a mixture of different types. Lignosulphonates, also known as "lignin sulphonates" or "sulphonated lignin", are water-soluble anionic mono- or polyelectrolyte polymers, typically obtained by treating lignin with a bisulfite acid solution. The thus obtained sulphonated lignins are then typically neutralized using a base, and then concentrated and dried to obtain a lignosulphonate powder.

The specific type of lignosulphonate(s) used is not critical. Lignosulphonates may have a very wide range of molecular weight with molecular weights of between 10,000 to 200,000 Daltons. They are often very polydisperse, and may even polymerize again under certain conditions. Lignosulphonates typically comprise an organic framework which is a sulphonated random copolymer of three aromatic co-monomers, more particularly coniferyl alcohol, p-coumaryl alcohol, and sinapyl alcohol; wherein coniferyl alcohol typically is the main unit.

Cations which bind to the sulphonic groups are typically selected from NH⁴⁺, Ca²⁺, Na⁺, Mg²⁺, and K⁺. In particular embodiments, NH⁴⁺, Ca²⁺, or a mixture thereof is used. In particular embodiments, the lignosulphonate(s) are selected from the group consisting of magnesium lignosulphonate, calcium lignosulphonate, ammonium lignosulphonate, and sodium sulphonate. In particular embodiments, magnesium lignosulphonate is used.

In particular embodiments, one or more modified lignosulphonates may be used, for example lignosulphonates which are provided with specific functional groups. In other embodiments, the lignosulphonates are not modified.

Examples of suitable commercially available lignosulphates include lignosulphates sold under the name Ligno Arbo C12 (available from Tembec, Canada), Bretax (e.g. Bretax C, available from Burgo Group, Italy), Novibond (e.g. Novibond AC, available from Plater Chemicals Group, United Kingdom), Ligno (e.g. Lignon Solus 5CA, Ligno DP921, Ligno CA524, Ligno CA95, and Ligno CA95h, available from Borregaard, Norway), and Lignobond (available from Borregaard, Norway).

Typically, the PCE(s) and lignosulphonate(s) will be the main plasticizers of the plasticizer compositions described herein. However, it is envisaged that in certain embodiments, the plasticizer composition may comprise one or more other plasticizers, also referred to herein as co-plasticizers. In certain embodiments, the plasticizer compositions may comprise 0 to 20 wt% of one or more co-plasticizer, based on the total weight of PCE(s) and lignosulphonate(s). In preferred embodiments, the plasticizer compositions may comprise 0 to 10 wt% of one or more co-plasticizers, or even 0 to 5 wt%, based on the total weight of PCE(s) and lignosulphonate(s). Examples of suitable co-plasticizers include, but are not limited to polynaphthalene sulphonates and polymelamine sulphonates. In particular embodiments, the plasticizer compositions described herein may comprise 0.5 wt% to 10 wt% of one or more plasticizers selected from a polynaphthalene sulphonate and a polymelamine sulphonate.

Unlike PCE(s) and lignosulphonate(s), other co-plasticizers such as poly naphthalene sulphonates may contain the carcinogen formaldehyde. Even when present in small quantities, the presence of formaldehyde is undesirable. Accordingly, it is envisaged that in specific embodiments, the plasticizer compositions described herein are free of co-plasticizers.

The plasticizer compositions described herein are characterized in that the lignosulphonate(s) represent from 1.0 wt% to 20 wt% of the total PCE and lignosulphonate weight. The present inventors have found that when used in these ratios, the combination of PCE(s) and lignosulphonate(s) provide an optimal compression strength. In specific embodiments, the lignosulphonate(s) represent from 2.5 wt% to 20 wt% of the total PCE and lignosulphonate weight. In certain embodiments, the lignosulphonate(s) represent from 5.0 wt% to 20 wt% of the total PCE and lignosulphonate weight; or between 10 wt% to 20 wt% based on the total PCE and lignosulphonate weight.

The plasticizer compositions described herein are particularly useful in plaster compositions, for example for the manufacture of plasterboard. In particular embodiments, the plasticizer compositions described herein may be added to a plaster composition as such, i.e. the PCE(s) and lignosulphonate(s) are added simultaneously. In such embodiments, the PCE(s) and lignosulphonate(s) may form the main components of the plasticizer composition; for example the composition may comprise at least 80 wt% of a mixture of PCE(s) and lignosulphonate(s), preferably at least 90 wt% of a mixture of PCE(s) and lignosulphonate(s), or even at least 95 wt%. However, it is also envisaged that in certain embodiments, the PCE(s) and lignosulphonate(s) are minor components of the composition. Accordingly, in particular embodiments, the plasticizer compositions described herein may comprise other components besides plasticizers. For example, the composition may further comprise one or more components of a plaster composition, such as plaster and/or water.

In particular embodiments, the plasticizer compositions described herein may comprise a solvent, preferably water. Accordingly, the PCE(s) and LS(s) may be dissolved in a solvent, such as water. It is further envisaged that the PCE(s) and lignosulphonate(s) may be mixed with a plaster (or other) composition separately. In such embodiments, the PCE and lignosulphonate mixture will also comprise other components, such as plaster, water and/or foaming agent.

Further provided herein is a plaster composition comprising a plasticizer composition as described above. More particularly, the plaster composition comprises plaster, (gauging) water, and a plasticizer composition as described above. The plaster composition typically is a plaster slurry.

The plaster composition described herein comprises plaster and water as its main components. Typically, the sum of plaster and water forms at least 90 wt% of the plaster composition, preferably at least 95 wt%, or even at least 98 wt%.

The plaster contained in the plaster composition is a hydratable calcium sulphate, such as calcium sulphate hemihydrate. Preferably, the plaster contains at least 70 wt% calcium sulphate hemihydrate, or even at least 85 wt% calcium sulphate hemihydrate. The calcium sulphate hemihydrate may be in its α or β form, and preferably in the β form. The plaster is typically provided in powder form, as is known in the art.

In addition to the water and plaster, the plaster composition described herein further comprises a plasticizer composition as described above. Accordingly, the plaster composition described herein comprises a mixture of plaster, water, one or more PCEs, and one or more lignosulphonates; wherein the lignosulphonate(s) represent from 1.0 wt% to 20 wt% of the total PCE and lignosulphonate weight.

Typically, the plasticizer composition will be present in the plaster composition in such amount that the total PCE and lignosulphonate content in the plaster composition ranges from 0.01 wt% and 1.00 wt%, based on the dry weight of the plaster. Lower amounts can result in an insufficient fluidization, whereas at higher amounts the additional fluidization may no longer outweigh disadvantages such as the loss of compression strength. In preferred embodiments, the total PCE and lignosulphonate content in the plaster composition ranges from 0.05 wt% and 0.50 wt%, based on the dry weight of the plaster. In further embodiments, the total PCE and lignosulphonate content in the plaster composition ranges from 0.10 wt% and 0.35 wt%, based on the dry weight of the plaster.

In particular embodiments, the plaster composition comprises at least 0.01 wt% of PCE(s) and at least 0.0025 wt% of lignosulphonate(s). In further embodiments, the plaster composition comprises at least 0.02 wt% of PCE(s) and at least 0.005 wt% of lignosulphonate(s). In yet further embodiments, the plaster composition comprises at least 0.05 wt% of PCE(s) and at least 0.01 wt% of lignosulphonate(s)

The presence of the plasticizer composition ensures that the plaster composition maintains an acceptable fluidity, even when using relatively low amounts of water. In the manufacture of plasterboard, it is preferred to use as little water as possible, as the excess water needs to be removed by an energy-consuming drying step. The less water used in the plaster composition, the more plasticizer is typically needed.

Typically, the plaster composition will have a water/plaster ratio between 0.50 and 1.00. The water/plaster ratio refers to the weight of (free) water in the plaster composition divided by the dry weight of plaster in the plaster composition. With "free water" is meant all water which is not part of the hydrate. In preferred embodiments, the plaster composition described herein has a water/plaster ratio below 0.80. In further embodiments, the plaster composition has a water/plaster ratio below 0.75, below 0.70, below 0.65, or even below 0.60.

The plaster composition described herein may be foamed or non-foamed. In preferred embodiments, the plaster composition is foamed. Accordingly, the plaster composition may comprise one or more foaming agents. Foaming agents are surfactants which are typically used in plaster compositions for the production of light-weight plasterboards. Indeed, the addition of foaming agents introduces voids in the plaster composition and resulting gypsum core, thus leading to a light-weight gypsum core.

The amount of foaming agents added may depend on the foaming agent type, and the desired density of the plasterboard to be produced. Typically, an amount ranging from 0.01 wt% to 0.1 wt% (relative to the dry plaster weight) is used. Suitable foaming agents for use in the plaster composition described herein include but are not limited to alkylsulphates, alkylethersulphates, alkylethercarboxylates, ethoxylated alkylphenols, alkylsulphonates, alkylpolyglucosides, betaines, amine oxydes, alkylpolysaccharides, and alkylsulfosuccinates. Preferred foaming agents include alkylsulphates, alkylethersulphates, alkylethercarboxylates, and ethoxylated alkylphenols. Particularly preferred foaming agents are alkylsulphates and alkylethersulphates, more particularly the sodium or ammonium salts thereof.

The combination of PCE and LS was found to provide good results with sulphate based foaming agents, such as alkylsulphate based foaming agents. A class of particularly suitable alkylsulphate based foaming agents is described in European patent application EP1328485.

In particular embodiments, the plaster composition comprises at least one foaming agent which is an alkylsulphate or derivative thereof. Preferred foaming agents are sulphate salts of formula R¹⁸-OSO₃M", wherein:
- R¹⁸ represents a linear or branched hydrocarbyl; preferably alkyl, more preferably a linear alkyl, such as a linear C₆₋₁₆alkyl; and
- M" represents NH₄ (or an organic amine residue) or a metal, the metal being preferably selected from the list consisting of Na, K, Mg; most preferably M" represents Na or NH₄.

The plaster composition may comprise a single foaming agent or a mixture of foaming agents. In particular embodiments, the plaster composition may comprise a mixture of sulphate salts of formula R¹⁸-OSO₃M" as described above. More particularly, a mixture of sulphate salts with different hydrocarbyl moieties R¹⁸ and/or different counterion moieties M can be used.

In particular embodiments, the foaming agents comprise a mixture of sulphate salts of formula R¹⁸-OSO₃M", wherein M" is as defined above; and each R¹⁸ is C₆₋₁₆alkyl, wherein the average number of carbon atoms in the R¹⁸ groups ranges from 9 to 11, preferably from 10 to 11. In further embodiments, each R¹⁸ is a linear C₆₋₁₆alkyl.

In particular embodiments, the foaming agents comprise or consist of one or more sulphates selected from the list consisting of n-octylsulphate (e.g. sodium n-octylsulphate), n-decylsulphate (e.g. sodium n-decylsulphate), and n-dodecylsulphate (e.g. sodium n-dodecylsulphate).

In preferred embodiments, the foaming agents comprise 0-30 wt% n-octylsulphate, 50-75 wt% n-decylsulphate, and 10-50 wt% n-dodecylsulphate. In specific embodiments, the foaming agents comprise 0-15 wt% n-octylsulphate, 55-75 wt% n-decylsulphate, and 18-37 wt% n-dodecylsulphate.

In particular embodiments, the foaming agents comprise a mixture of sodium alkylsulphates and ammonium alkylsulphates.

The plaster composition described herein may further comprise one or more additives such as pigments, fillers, accelerants, retardants, and starches. The use of such additives is well known in the art and will not be discussed further herein.

Further provided herein is the use of a plasticizer composition or plaster composition as described above, for the manufacture of plasterboard.

Also provided herein is a method for the manufacture of a plasterboard, using a plaster composition as described above. Methods for the manufacture of a plasterboard based on a given plaster composition or slurry are well known in the art. More particularly, the method described herein may comprise:
(a) providing a plaster composition as described herein,
(b) forming said plaster composition into a panel; and
(c) allowing said panel to set.

In step (a), a plaster composition as described above is provided. The plaster composition may be prepared by mixing plaster with water and plasticizer, and optionally one or more additives, in a mixer as is known in the art. The moment of introduction of the plasticizer is not critical. For example, plasticizers may be introduced directly in the gauge water, or be introduced directly in the mixer. Plasticizers may also be in the "foam" water before generating foam in a foam generator. Solid plasticizers are usually introduced in a powder form in the gypsum plaster, but they can also be dissolved in water before their introduction in the mixer. In preferred embodiments, the PCE and the foaming agent(s) (if present) are not added simultaneously to the mixture.

The LS and PCE may be added simultaneously or separately to the plaster. In particular embodiments, one of LS and PCE may be added to a plaster slurry comprising plaster and gauging water, whereas the other of LS and PCE may be added to foam water. Then, foam may be prepared from the foam water, and the foam may be added to the gypsum slurry.

In step (b) the plaster composition is formed into a panel. This can be done using known methods. Typically, the plaster composition is deposited between two facers or liners, i.e. sheets of covering material. Then, the slurry is formed or pressed into a panel. Preferably, the facers comprise or are made of paper or cardboard. However, also facers comprising a non-woven fabric comprising mineral, glass, or polymer fibres may be used.

The panel produced in step (b) is of indefinite length, and will be cut to the required size.

In step (c), the panel obtained in step (b) is allowed to set. More particularly, the plaster composition in the panel is allowed to set. This is well known in the art. Typically, the method described herein will also comprise the step of drying the panel. Drying is typically performed at elevated temperature, preferably between 100°C and 250°C. Drying may occur after or simultaneously with the setting of the panel.

Further described herein is a plasterboard obtainable by setting of a plaster composition as described above. More particularly, the plasterboard may be obtained by the method for the manufacture as described above.

The skilled person will understand that the plasterboard described herein, and more particularly the gypsum core thereof, is characterized in that it comprises one or more PCEs and one or more lignosulphonates, wherein the one or more lignosulphonates represent 1.0 to 20 wt% of the total PCE and lignosulphonate weight.

In particular embodiments, the plasterboard described herein, and more particularly the gypsum core thereof, comprises between 0.01 wt% and 1.0 wt% of PCE and LS compounds, preferably between 0.05 wt% and 0.5 wt%. In particular embodiments, the plasterboard described herein does not contain other plasticzers than PCE and LS.

The plasterboard will typically comprise a gypsum core obtained via the setting of a plaster composition as described above, wherein at least one side of the core is provided with a facer. Preferably, both sides of the core are provided with a facer. The facers of the opposing sides of the gypsum board may be identical or not.

Preferably, the one or more facers comprise or are made of paper or cardboard. However, also facers comprising a non-woven fabric comprising mineral, glass, or polymer fibres may be used.

The plasterboard described herein, and more particularly the core thereof, preferably has a density below 1000 g/cm³, more particularly between 600 g/cm³ and 900 g/cm³. In preferred embodiments, the core may have a density below 850 g/cm³. In certain embodiments, the core may have a density below 800 g/cm³, below 750 g/cm³, below 700 g/cm³, or even below 650 g/cm. As described above, such densities can be obtained by manufacturing the plasterboard from a foamed gypsum slurry. Accordingly, the gypsum core of the plasterboard may further comprise one of more foaming agents, preferably in a range from 0.01 wt% to 0.1 wt%.

Typical plasterboards have a thickness of about 12.5 mm. However, the present plasterboards are not limited to such thickness. In certain embodiments the plasterboard thickness may range from 5 mm to 50 mm.

### EXAMPLES

The following examples are provided for the purpose of illustrating the present invention and by no means are meant and in no way should be interpreted to limit the scope of the present invention.

### Example 1: Preparation of plasticizer compositions

Nine plasticizer compositions (PL1 to PL9) were prepared as described below.

Five plasticizer compositions (PL1 to PL5) are prepared by mixing a PCE with a lignosulphonate compound, in various ratios. PL2, PL3, and PL5 are plasticizer compositions as described herein (1-30 wt% LS with respect to the total LS+PCE content), whereas PL1, PL2 and PL4 are comparative examples (more than 20 wt% LS with respect to the total LS+PCE content). Four comparative plasticizer compositions (PL6 to PL9) are prepared without LS and/or PCE.

Two different commercially available PCEs are used, more particularly Viscocrete® G2 (available from Sika AG, Switzerland) and neomere®FLOW 580 N (available from Chryso SAS, France). In all compositions where a lignosulphonate is present, the lignosulphonate is Arbo C12 (available from Tembec, Canada).

Comparative examples PL6 and PL7 do not comprise a lignosulphonate. Comparative example PL8 does not comprise a PCE. Comparative example PL9 does not comprise a PCE or LS, but comprises the commercially available poly naphthalene sulphonate (PNS) based plasticizer CHRYSO®Gypflu CA (available from Chryso SAS, France). CHRYSO®Gypflu CA is a fluidifier which is specifically designed for use in plaster mixes for the manufacture of plasterboards. Whereas CHRYSO®Gypflu CA is a naphthalene-formaldehyde condensate, Viscocrete® G2 and neomere®FLOW 580 N are formaldehyde-free.

All plasticizer compositions are prepared by mixing the appropriate amount of plasticizer(s) in 600 mL of water, at room temperature. More particularly, a PCE content of 0.17 wt% (Viscocrete® G2), 0.22 wt% (neomere®FLOW 580 N), or 0.42 wt% (CHRYSO®Gypflu CA) was used; and a LS content ranging from 0 wt% to 0.14 wt%. Details of these composition are shown in Table 1.

**Table 1 - Plasticizer compositions**

| **Composition** | **PCE** | **LS** | **wt% LS*** |
|---|---|---|---|
| PL1 | Viscocrete G2 | Ligno Arbo C12 | 45 |
| PL2 | Viscocrete G2 | Ligno Arbo C12 | 29 |
| PL3 | Viscocrete G2 | Ligno Arbo C12 | 17 |
| PL4 | neomere®FLOW 580 N | Ligno Arbo C12 | 39 |
| PL5 | neomere®FLOW 580 N | Ligno Arbo C12 | 13 |
| PL6 | Viscocrete G2 | n/a | 0 |
| PL7 | neomere®FLOW 580 N | n/a | 0 |
| PL8 | n/a | Ligno Arbo C12 | 100 |
| PL9 | n/a | n/a | 0 |

| | | | |
|---|---|---|---|
| * Relative to the total content of LS and PCE | | | |

### Example 2: Preparation of plaster compositions

For each plasticizer composition of Example 1, a corresponding plaster composition was prepared as described below.

Each plaster compositions is prepared by mixing plaster, water, plasticizer composition, accelerator, and starch; at a temperature of about 22°C. A water/stucco ratio of 0.75 was used for all compositions.

The plaster used for preparing the plaster compositions is calcium sulphate hemihydrate obtained by dehydration in a rotating kiln of a synthetic gypsum produced in a desulphurization process. The synthetic gypsum used for preparing the hemihydrate has the following content: 99.2 wt% gypsum, <0.1 wt% anhydrite; <0.1 wt% magnesite; <0.1wt% dolomite; 0.5 wt% calcite; 0.1 wt% ankerite; 0.1 wt% quarts; 0.1 wt% Celestine; and <0.1 wt% fluorite.

For each type of PCE, the same amount of PCE was added in the various compositions, regardless of the amount of LS present in the composition. The dosage of each PCE is adapted to get the same fluidification efficiency as CHRYSO®Gypflu CA using a water/plaster ratio of 0.75; when the PCE is used as sole fluidizer (i.e. without LS). More particularly, the used dosage is about 7.3 g/m² Viscocrete G2, or about 10.0 g/m² neomere®FLOW 580 N, or about 17.5 g/m² CHRYSO®Gypflu CA in the final boards.

In all compositions, an amount of accelerator is added as to obtain a setting time of about 3 minutes and 25 seconds. A Ball Mill Accelerator (BMA) is used, comprising a mixture of 50 wt% of synthetic gypsum and 50 wt% of an acid-modified wheat flour starch (Ceresan SN 40 1 00 01, available from Ceresan Erfurt GmbH, Germany).

Further starch is added as to obtain a starch content of about 5 g/m² in the final plasterboard. The total amount of starch present in the plasterboard is relatively low, as to allow assessing the effect of the fluidizer on the dry bond. The dry bond (see example 3) may be improved further by providing the boards with a higher starch content.

### Example 3: Preparation of plasterboards

For each plaster composition described in Example 2, and therefore for each plasticizer composition described in Example 1, a number of miniboards (have a surface area of 0.1 m² and a thickness of 12.5 mm) were prepared as described below.

First, foam is prepared by stirring 5.25 ml of a foaming agent solution with 170 mL of water, for 1 minute at 22°C in a foam generator of the Hamilton Beach type set to a voltage of 55 V. The foaming agent solution comprises 50 g/L of foaming agents dissolved in water, the foaming agents being composed of composed of sodium alkyl sulphates comprising 7.7% by weight of sodium octylsulphate (C8), 73.1% by weight of sodium decylsulphate (C10) and 19.2% by weight of sodium dodecylsulphate (C12).

The foam is then introduced into a gypsum plaster composition according to Table 2, and the resulting gypsum slurry is deposited between two sheets of paper facers. The miniboard is subsequently dried in an oven at a steadily increasing temperature of from 100° C to 200° C. over 15 min, and then a steadily decreasing temperature from 200° C. to 90° over 25 min. Details of the resulting boards are provided in Table 2. The total plasticizer content refers to the total amount of PCE and LS (BRD1 to BRD8) or the total amount of PNS (BRD9).

**Table 2 - Plasterboard properties**

| Board | Plasticizer composition | Total plasticizer content (g/m²) | Dry weight (kg/m²) | Compressiv e strength (Mpa)** | Dry bond (% peel) |
|---|---|---|---|---|---|
| BRD1 | PL1 | 13,2 | 9,3 | 4,97 | 5 |
| BRD2 | PL2 | 10,5 | 9,6 | 5,35 | 30 |
| BRD3 | PL3 | 8,7 | 9,4 | 5,59 | 25 |
| BRD4 | PL4 | 15,5 | 9,4 | 4,42 | 5 |
| BRD5 | PL5 | 11,6 | 10 | 5,31 | 10 |
| BRD6 | PL6 | 7,3 | 9,5 | 5,01 | 60 |
| BRD7 | PL7 | 9,8 | 9,7 | 4,98 | 30 |
| BRD8 | PL8 | 17,5 | 9,1 | 3,95 | 15 |
| BRD9 | PL9 | 17,5 | 9,1 | 4,8 | 0 |

| | | | | | |
|---|---|---|---|---|---|
| ** Re-calculated for a corresponding board with a dry weight of 9.2 kg/m² | | | | | |

### Example 4 - Analysis of plasterboards

### 4.1 Dry bond

The quality of the bond between the paper facer and the gypsum core of the boards was evaluated. The dry bond is evaluated by studying the percentage of peel of the paper facer from the core upon tearing the facer off the board. The dry bond test is carried out on a dry board, more particularly on a sample which is dried in an oven at 45°C until a constant weight is obtained. The results are summarized in Table 2. The test results are given in terms of percentage of bond failure, with 100% being no paper to gypsum core bond, and 0% no paper to core failure (i.e. full paper bond to the core). As indicated above (example 2), the quality of the bond may be improved further by increasing the starch content of the board.

### 4.2 Compressive strength

To evaluate the mechanical properties of the boards, the compressive strength is measured from a 5×5 cm² sample withdrawn from the board after drying at 45°C. The test involves the compression of the sample between two plates of a press moving at a constant speed of 4 mm/min. The reported used is the load to be applied for the beginning of the collapse of the weakest area of the core.

In order to eliminate the influence of the board density/dry weight, the measured compressive strength for all boards is converted to the compressive strength for a corresponding board having a dry weight of 9.2 kg/m². The density is measured according to standard NF EN 520+A1 Nov. 2009. The results are summarized in Table 2.

### 4.3 Conclusions

PNS provides an acceptable compressive strength and the best bond, but high amounts are required in order to obtain a good fluidity (see BRD9). As PNS typically contains formaldehyde, the need to use high amounts is not desirable.

When used as sole plasticizer, PCEs provide a slightly better compressive strength than PNS (see BRD6 and BRD7). Moreover, only low amounts are needed to obtain a good fluidity, and PCEs are not formaldehyde-based. However, the use of PCEs was found to negatively influence the bond quality between the paper facer and the gypsum core.

When used as sole plasticizer, LS provides a bond quality which superior than with PCEs but inferior than with PNS (see BRD8). However, the use of LS alone was found to result in a very low compressive strength of the resulting boards.

Surprisingly, the present inventors have found that a combination of LS+PCE (BRD1-5) results in a better bond than when the corresponding PCE alone is used, and provides a higher compressive strength. Surprisingly, the present inventors further found that an optimal compressive strength is reached when the LS to PCE ratio is kept below 30.

## Claims

1. A plaster composition comprising plaster, water, and a plasticizer composition; said plasticizer composition comprising a mixture of one or more polycarboxylate ethers and one or more lignosulfonates, wherein said lignosulfonates represent 1.0 to 20 wt% of the total polycarboxylate ether and lignosulfonate weight.

2. The plaster composition according to claim 1, wherein said one or more lignosulphonates represent 2.5 to 20 wt% of the total polycarboxylate ether and lignosulphonate weight.

3. The plaster composition according to claim 1 or 2, wherein said one or more lignosulphonates are selected from the group consisting of magnesium lignosulphonate, calcium lignosulphonate, ammonium lignosulphonate, and sodium sulphonate.

4. The plaster composition according to any one of claims 1 to 3, wherein said plasticizer composition comprises not more than 10 wt% of plasticizers other than lignosulphonates and polycarboxylate ethers, with respect to the total lignosulphonate and polycarboxylate ether weight.

5. The plaster composition according to any one of claims 1 to 4, wherein said plasticizer composition is present in an amount as to provide a total polycarboxylate ether and lignosulphonate content from 0.05 wt% to 0.5 wt% based on the dry weight of said plaster.

6. The plaster composition according to any one of claims 1 to 5, further comprising one or more foaming agents.

7. The plaster composition according to claim 6, wherein said one or more foaming agents are selected from the list consisting of an alkylsulphate and an alkylethersulphate.

8. The plaster composition according to any one of claims1 to 7, said plaster composition having a water/plaster ratio below 0.8.

9. A plasterboard obtainable by setting of a plaster composition according to any one of claims1 to 8.

10. The plasterboard according to claim 9, wherein said plasterboard has a gypsum core having a density below 850

11. The plasterboard according to claim 9 or 10, wherein said plasterboard has a gypsum core comprising from 0.05 wt% to 0.5 wt% of one or more lignosulphonates and polycarboxylate ethers.

12. The plasterboard according to any one of claims 9 to 11, wherein said plasterboard comprises a gypsum core having two opposing faces, wherein each of said faces is covered by a cardboard or paper liner.

13. A method for the manufacture of a plasterboard, comprising:
(a) providing a plaster composition according to any one of claims1 to 8,
(b) forming said plaster composition into a panel; and
(c) allowing said panel to set.

14. Use of a plaster composition according to any one of claims 1 to 8, for the manufacture of a plasterboard.

## Patentansprüche

1. Gipszusammensetzung, umfassend Gips, Wasser, und eine Weichmacherzusammensetzung; wobei die Weichmacherzusammensetzung eine Mischung aus einem oder mehreren Polycarboxylatethern und einem oder mehreren Lignosulfonaten umfasst, wobei die Lignosulfonate 1,0 bis 20 Gew.-% des Gesamtgewichts an Polycarboxylatether und Lignosulfonat darstellen.

2. Gipszusammensetzung nach Anspruch 1, wobei das eine oder die mehreren Lignosulfonate 2,5 bis 20 Gew.-% des Gesamtgewichts an Polycarboxylatether und Lignosulfonat darstellen.

3. Gipszusammensetzung nach Anspruch 1 oder 2, wobei das eine oder die mehreren Lignosulfonate ausgewählt sind aus der Gruppe, bestehend aus Magnesiumlignosulfonat, Calciumlignosulfonat, Ammoniumlignosulfonat und Natriumsulfonat.

4. Gipszusammensetzung nach einem der Ansprüche 1 bis 3, wobei die Weichmacherzusammensetzung bezogen auf das Gesamtgewicht an Lignosulfonat und Polycarboxylatether nicht mehr als 10 Gew.-% von anderen Weichmachern als Lignosulfonate und Polycarboxylatether umfasst.

5. Gipszusammensetzung nach einem der Ansprüche 1 bis 4, wobei die Weichmacherzusammensetzung in einer Menge vorliegt, um basierend auf dem Trockengewicht des Gipses einen Gesamtgehalt an Polycarboxylatether und Lignosulfonat von 0,05 Gew.-% bis 0,5 Gew.-% bereitzustellen.

6. Gipszusammensetzung nach einem der Ansprüche 1 bis 5, ferner umfassend einen oder mehrere Schaumbildner.

7. Gipszusammensetzung nach Anspruch 6, wobei der eine oder die mehreren Schaumbildner ausgewählt sind aus der Liste, bestehend aus einem Alkylsulfat und einem Alkylethersulfat.

8. Gipszusammensetzung nach einem der Ansprüche 1 bis 7, wobei die Gipszusammensetzung ein Wasser/Gips-Verhältnis unter 0,8 aufweist.

9. Gipskarton, erhältlich durch Abbinden einer Gipszusammensetzung nach einem der Ansprüche 1 bis 8.

10. Gipskarton nach Anspruch 9, wobei der Gipskarton einen Gypsumkern mit einer Dichte unter 850 g/cm³ aufweist.

11. Gipskarton nach Anspruch 9 oder 10, wobei der Gipskarton einen Gypsumkern aufweist, der 0,05 Gew.-% bis 0,5 Gew.-% von einem oder mehreren Lignosulfonaten und Polycarboxylatethern umfasst.

12. Gipskarton nach einem der Ansprüche 9 bis 11, wobei der Gipskarton einen Gypsumkern mit zwei gegenüberliegenden Flächen umfasst, wobei jede der Flächen von einem Karton oder Kaschierpapier bedeckt ist.

13. Verfahren zur Herstellung eines Gipskartons, umfassend:
(a) Bereitstellen einer Gipszusammensetzung nach einem der Ansprüche 1 bis 8,
(b) Formen der Gipszusammensetzung zu einer Platte; und
(c) Abbinden lassen der Platte.

14. Verwendung einer Gipszusammensetzung nach einem der Ansprüche 1 bis 8 zur Herstellung eines Gipskartons.

## Revendications

1. Composition de plâtre comprenant du plâtre, de l'eau et une composition de plastifiant ; ladite composition de plastifiant comprenant un mélange d'un ou plusieurs éther de polycarboxylate et d'un ou plusieurs lignosulfonates, dans laquelle lesdits lignosulfonates représentent 1.0 à 20% en poids du poids total de l'ether polycarboxylate et du ligosulfonate.

2. Composition de plâtre selon la revendication 1, dans laquelle le ou les lignosulfonates représentent 2.5 à 20% en poids du poids total de l'éther de polycarboxylate et du ligosulfonate

3. Composition de plâtre selon la revendication 1 ou 2, dans laquelle le ou les lignosulfonates sont choisis dans une liste constituée de lignosulfonate de magnésium, lignosulfonate de calcium, lignosulfonate d'ammonium, et sulfonate de sodium.

4. Composition de plâtre selon l'une des revendications 1 à 3 dans laquelle la composition de plastifiant comprend par rapport au poids total de l'éther de polycarboxylate et du lignosulfonate , pas plus de 10% en poids de plastifiants autre que les lignosulfonates et les ethers polycarboxylate.

5. Composition de plâtre selon l'une des revendications 1 à 4 dans laquelle la composition de plastifiant est présente en une quantité telle qu'elle fournit une teneur totale en éther de polycarboxylate et en lignosulfonate de 0,05% à 0,5% en poids sur la base du poids sec dudit plâtre.

6. Composition de plâtre selon une des revendications 1 à 5, comprenant en outre un ou plusieurs agents moussants.

7. Composition de plâtre selon la revendication 6, dans laquelle le ou lesdits agents moussants sont choisis dans la liste consistant en un alkylsulfate et un alkyléthersulfate.

8. Composition de plâtre selon l'une des revendications 1 à 7, ladite composition de plâtre ayant un rapport eau / plâtre inférieur à 0,8.

9. Plaque de plâtre pouvant être obtenue par prise d'une composition de plâtre selon l'une des revendications 1 à 8

10. Plaque de plâtre selon la revendication 9, dans laquelle ladite plaque de plâtre a un cœur de gypse ayant une densité inférieure à 850

11. Plaque de plâtre selon la revendication 9 ou 10, dans laquelle ladite plaque de plâtre a un cœur de gypse comprenant de 0,05% à 0,5% en poids d'un ou plusieurs lignosulfonates et éthers de polycarboxylate.

12. Plaque de plâtre selon l'une des revendications 9 à 11, dans laquelle ladite plaque de plâtre comprend un cœur de gypse ayant deux faces opposées, dans lequel chacune desdites faces est recouverte d'un revêtement en carton ou en papier.

13. Procédé de fabrication d'une plaque de plâtre, comprenant:
(a) la fourniture d'une composition de plâtre selon l'une quelconque des revendications 1 à 8,
(b) la formation de ladite composition de plâtre en un panneau; et
(c) laisser ledit panneau prendre.

14. Utilisation d'une composition de plâtre selon l'une des revendications 1 à 8, pour la fabrication d'une plaque de plâtre.
